# EUROPEAN PATENT APPLICATION

(11) **EP 4 574 577 A1**
(43) Date of publication of application: **25.06.2025**
(21) Application number: 23855071.9
(22) Date of filing: 27.07.2023
(51) Int. Cl.: B60R 16/023, B60R 16/03, F02N 11/08

(54) **IGNITION WAKE-UP CIRCUIT**

(30) Priority: 18.08.2022 KR 20220103643
(71) Applicant: LG INNOTEK CO. LTD, Gangseo-gu Seoul 07796 (KR)
(72) Inventor: KIM, Jung Jun, Seoul 07796 (KR)
(74) Representative: DREISS Patentanwälte PartG mbB
(86) International application number: PCT/KR2023/010965
(87) International publication number: WO 2024/039101

(57) **Abstract**

An ignition wake-up circuit, according to an embodiment of the present invention, comprises: an input node receiving an ignition voltage as an input; an output node outputting a wake-up voltage; and a voltage sensing unit outputting a wake-up signal according to the magnitude of the ignition voltage. The voltage sensing unit outputs the wake-up signal when the ignition voltage reaches a voltage level greater than or equal to a first reference voltage from a voltage less than the first reference voltage, and outputs a low signal when the ignition voltage reaches a voltage level less than or equal to a first reference voltage from a voltage less than the first reference voltage, and output a low signal when the ignition voltage reaches a voltage less than or equal to a second reference voltage from a voltage greater than the second reference voltage, and the first reference voltage is greater than the second reference voltage.

## Description

### [Technical Field]

The present invention relates to an ignition wake-up circuit, and more specifically, to an ignition wake-up circuit capable of stable ignition wake-up operation and a power conversion device including the same.

### [Background Art]

A vehicle inverter uses a function such as an ignition wake-up to put an inverter in a sleep mode when not in operation to minimize current consumption, thereby preventing battery discharge.

Devices such as expensive MCUs and PMICs support an ignition wake-up function. However, since the 100W EOP controller uses a low-cost MCU without an ignition wake-up function for price competitiveness, a separate circuit configuration for an ignition wake-up function is required.

The circuit for the low-cost ignition wake-up function has a problem in that the ignition voltage causes malfunction when ripple exists near the threshold voltage value of the transistor.

### [Detailed Description of the Invention]

### [Technical Subject]

The technical problem to be solved by the present invention is to provide an ignition wake-up circuit capable of stable ignition wake-up operation and a power conversion device including the same.

### [Technical Solution]

An ignition wake-up circuit, according to an embodiment of the present invention, comprises: an input node receiving an ignition voltage as an input; an output node outputting a wake-up voltage; and a voltage sensing unit outputting a wake-up signal according to the magnitude of the ignition voltage, wherein the voltage sensing unit outputs the wake-up signal when the ignition voltage reaches a voltage level greater than or equal to a first reference voltage from a voltage less than the first reference voltage, and outputs a low signal when the ignition voltage reaches a voltage level less than or equal to a second reference voltage from a voltage greater than or equal to the second reference voltage, and the first reference voltage is greater than the second reference voltage.

In addition, the voltage sensing unit may include a voltage detector IC.

In addition, the wake-up signal may be the ignition voltage.

In addition, it may include a first resistor being connected in parallel between the input node and the voltage sensing unit.

In addition, it may include a clamping unit connected in parallel between the input node and the voltage sensing unit.

In addition, the clamping unit can clamp the ignition voltage to a first voltage or lower.

In addition, the clamping unit may include a Zener diode.

In addition, the output node can be connected to an ADC port of an MCU.

In addition, it may include a second resistor being connected in parallel between the output terminal of the voltage sensing unit and the output node.

In order to solve the above technical problem, in an ignition wake-up circuit according to another embodiment of the present invention, an output voltage Vout outputs an input voltage Vin when the input voltage Vin is higher than a first voltage VDET+, and the output voltage Vout outputs O V when the input voltage Vin falls below a second voltage VDET-, and wherein the first voltage VDET+ is higher than the second voltage VDET-.

In order to solve the above technical problem, a power conversion device according to an embodiment of the present invention includes a voltage conversion unit that converts an input voltage and outputs it; a control unit that operates the voltage conversion unit; and an ignition wake-up circuit unit that operates the control unit in a sleep mode or a wake-up mode according to an ignition voltage, wherein the ignition wake-up circuit unit includes the ignition wake-up circuit described above.

### [Advantageous Effects]

According to embodiments of the present invention, a hysteresis section can be set by using a voltage detector, and if a voltage detector is selected by considering the threshold voltage value of the AD port of the MCU, the IGN On/OFF operation can be reliably controlled even if the IGN voltage is unstable, thereby stabilizing the power supply. Compared to existing ignition wake-up circuits, the number of parts is reduced and optimized, thereby improving price competitiveness.

### [Brief Description of Drawings]

FIG. 1 is a block diagram of an ignition wake-up circuit according to an embodiment of the present invention.
FIG. 2 is a diagram showing hysteresis characteristics of an ignition wake-up circuit according to an embodiment of the present invention.
FIG. 3 is a block diagram of an ignition wake-up circuit according to an embodiment of the present invention.
FIG. 4 illustrates an implementation example of an ignition wake-up circuit according to an embodiment of the present invention.
FIG. 5 illustrates an application example of an ignition wake-up circuit according to an embodiment of the present invention.
FIG. 6 illustrates a comparative example of an ignition wake-up circuit according to an embodiment of the present invention.
FIG. 7 is a block diagram of a power conversion device according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention. In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used.

These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction based on one component may be included.

A modified embodiment according to the present embodiment may include some components of each embodiment and some components of the other embodiments. That is, a modified embodiment may include one embodiment of various embodiments, but may omit some components and include some components of the corresponding other embodiment. Or, it may be the opposite. The features, structures, effects, and the like to be described in the embodiments are included in at least one embodiment, and are not necessarily limited to one embodiment. Furthermore, the features, structures, effects, and the like exemplified in each embodiment may be combined or modified and implemented in other embodiments by a person having ordinary skill in the field to which the embodiments belong. Therefore, the contents related to such combinations and modifications should be interpreted as being included in the scope of the embodiments.

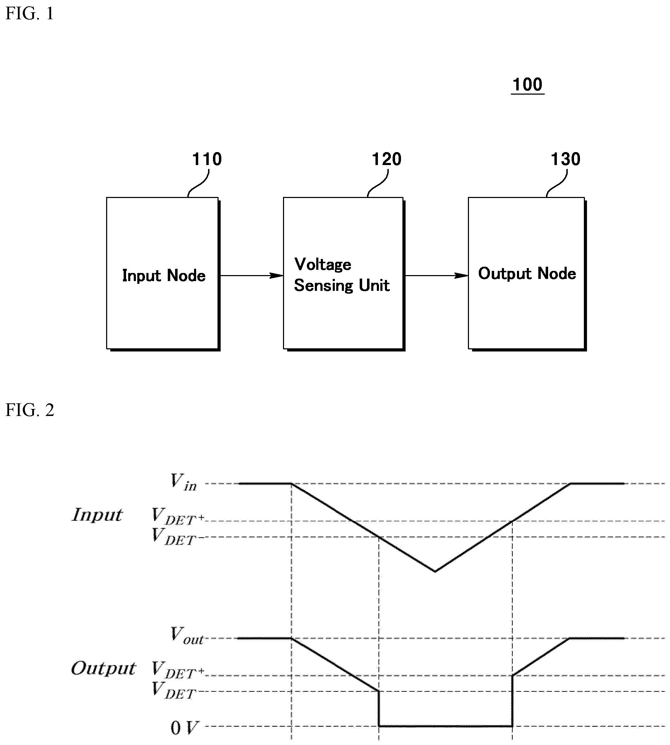

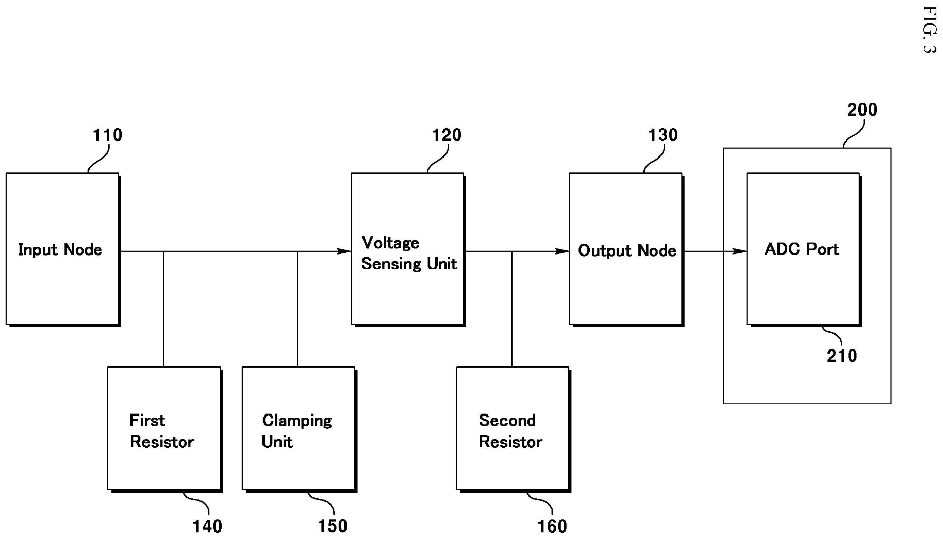

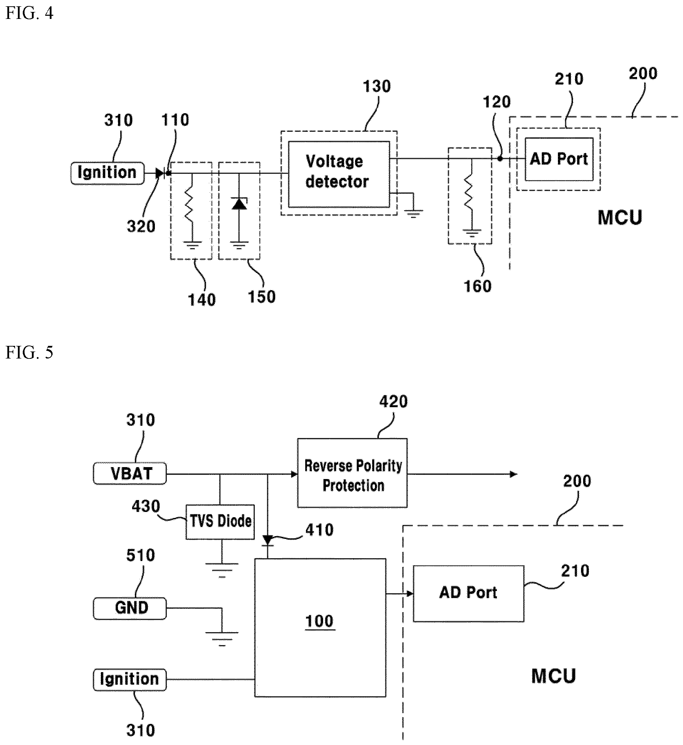

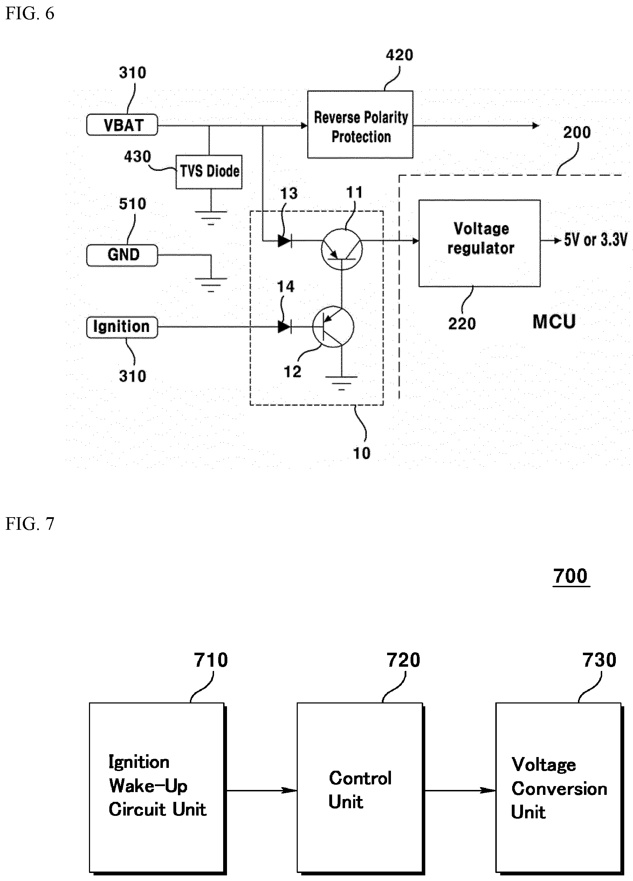

FIG. 1 is a block diagram of an ignition wake-up circuit according to an embodiment of the present invention; FIG. 2 is a diagram showing hysteresis characteristics of an ignition wake-up circuit according to an embodiment of the present invention; FIG. 3 is a block diagram of an ignition wake-up circuit according to an embodiment of the present invention; FIG. 4 illustrates an implementation example of an ignition wake-up circuit according to an embodiment of the present invention; FIG. 5 illustrates an application example of an ignition wake-up circuit according to an embodiment of the present invention; and FIG. 6 illustrates a comparative example of an ignition wake-up circuit according to an embodiment of the present invention.

An ignition wake-up circuit **100** according to one embodiment of the present invention is configured with an input node **110,** an output node **130,** and a voltage sensing unit **120,** and may include a first resistor **140,** a clamping unit **150,** and a second resistor **160.**

An ignition wake-up circuit **100** according to an embodiment of the present invention is a circuit that wakes up an MCU **200.** The ignition wake-up circuit **100** may be an ignition wake-up circuit that wakes up an MCU **200** that has been switched to a sleep mode for low power consumption when an ignition voltage is inputted. Here, the MCU **200** that wakes up may be a control unit of an inverter, and the inverter may be an inverter for driving an EV cooling electric oil pump (EOP) motor. In addition, it is obvious that it may be applied to various devices that include a wake-up function with an ignition voltage.

The input node **110** receives an ignition voltage, the voltage sensing unit **120** outputs a wake-up signal according to the size of the ignition voltage, and the output node **130** outputs a wake-up voltage.

The voltage sensing unit **120** outputs the wake-up signal when the ignition voltage becomes higher than the first reference voltage at a voltage lower than the first reference voltage, and outputs a low signal when the ignition voltage becomes lower than the second reference voltage at a voltage higher than the second reference voltage. Here, the first reference voltage may be a voltage higher than the second reference voltage.

Here, the ignition voltage is a voltage that occurs when the ignition is driven, and may occur when the vehicle is turned on. When the ignition is turned off, the internal modules or devices of the vehicle that have switched to sleep mode can be woken up using the ignition voltage when the ignition is turned on.

When the ignition voltage becomes higher than the reference voltage, a wake-up signal is outputted. However, if the ignition voltage has a ripple in the reference voltage, the wake-up function may malfunction or become unstable. In particular, when the change in the ignition voltage is small, the voltage may repeatedly increase and decrease compared to the reference voltage due to ripple near the reference voltage, which may cause problems such as malfunction. In order to solve this problem, the voltage sensing unit **120** outputs a wake-up signal using the first reference voltage and the second reference voltage.

The voltage sensing unit **120** can stably perform the wake-up function by forming a hysteresis characteristic by using the first reference voltage and the second reference voltage. That is, the first reference voltage and the second reference voltage, which are different reference voltages, are used depending on the directionality of the ignition voltage change. Here, the first reference voltage can be set to a voltage greater than the second reference voltage.

More specifically, the voltage sensing unit **120** outputs the wake-up signal when the ignition voltage becomes higher than the first reference voltage at a voltage lower than the first reference voltage, and outputs a low signal when the ignition voltage becomes lower than the second reference voltage at a voltage higher than the second reference voltage.

When the ignition voltage is input, the ignition voltage can increase. When the ignition voltage changes from a voltage lower than the first reference voltage to a voltage higher than the first reference voltage, a wake-up signal is outputted when the ignition voltage becomes higher than the first reference voltage. That is, the first reference voltage is a voltage that serves as a reference for outputting the wake-up signal in a direction in which the ignition voltage increases.

Conversely, the ignition voltage can be reduced. When the ignition voltage is greater than the first reference voltage and outputs a wake-up signal, when the ignition voltage decreases and changes from a voltage greater than the second reference voltage to a voltage less than the second reference voltage, and when the ignition voltage becomes lower than the second reference voltage a low signal, not a wake-up signal, is outputted. That is, the second reference voltage is a voltage that serves as a reference for outputting a low signal in a direction in which the ignition voltage decreases.

That is, when the wake-up function is turned on, it is compared with a larger reference voltage, and when the wake-up function is turned off, it is compared with a smaller reference voltage, thereby creating a difference in the voltages for turning the wake-up on and off, and through this, it is possible to prevent the wake-up function from malfunctioning due to changes in ripple at a specific voltage.

FIG. 2 illustrates an output voltage Vout output according to an input voltage Vin input to an input node of a voltage sensing unit **120.** For example, Vin may have a change from decreasing to increasing again, as shown in FIG. 2, however, at this time, in the decreasing direction, it may become smaller than the second reference voltage VDET- at a voltage greater than the second reference voltage VDET-, and in the increasing direction, it may become smaller than the first reference voltage VDET+ at a voltage less than the first reference voltage VDET+.

The voltage sensing unit **120** can output the input ignition voltage as a wake-up voltage when the wake-up function is turned on, and can output a low signal when the wake-up function is turned off. Here, the low signal can be 0 V or a preset voltage. The voltage sensing unit **120** can also output a high signal when the wake-up function is turned on. Here, the high signal is a signal having a higher voltage than the low signal, and can be a preset voltage.

The voltage sensing unit **120** may include a voltage detector IC and may set hysteresis intervals of the first reference voltage VDET+ and the second reference voltage VDET-.

In the direction of decreasing voltage, the second reference voltage becomes the reference voltage that turns off the wake-up function. Before the wake-up function is turned off, when it is turned on, the output voltage Vout is outputted in response to the input voltage Vin, and when the input voltage Vin gradually decreases and becomes lower than the second reference voltage VDET-, a low signal of 0 V is outputted.

Conversely, in the direction of increasing voltage, the first reference voltage becomes the reference voltage that turns on the wake-up function. Before the wake-up function is turned on, in the off state, the output voltage Vout outputs a low signal of 0 V, and when the input voltage Vin gradually increases and becomes higher than the first reference voltage VDET+, the output voltage Vout is outputted corresponding to the input voltage Vin, and a wake-up signal is outputted.

In this way, a hysteresis section is implemented using the first reference voltage and the second reference voltage, and through this, even if a ripple occurs in the ignition voltage between the first reference voltage and the second reference voltage, the existing state is maintained, thereby preventing malfunction.

A first resistor **140** being connected in parallel between an input node **110** and a voltage sensing unit **120** may be included. The first resistor **140** is connected in parallel to the input node **110** and can quickly consume the voltage remaining in the circuit when the ignition is turned off. Through this, the ignition wake-up circuit **100** can secure the falling time. For example, the voltage in the circuit must fall below a predetermined voltage within 20 ms from the ignition turning off. The resistance value of the first resistor **140** may be set according to the size and falling time of the ignition voltage or may be set by the user.

A clamping unit **150** being connected in parallel between an input node **110** and a voltage sensing unit **120** may be included. When an ignition voltage higher than an operating voltage is inputted to the input node **110,** the clamping unit **150** may clamp the ignition voltage to a first voltage or lower. For example, the clamping unit may clamp the ignition voltage being inputted to the input node 110 to 5 V. By clamping the input voltage to be the same as if a constant voltage is inputted, the ignition wake-up circuit 100 may operate more stably.

The clamping unit **150** may include a Zener diode. As shown in FIG. 4, the Zener diode may be connected in the reverse direction. When the reverse bias voltage applied to the Zener diode in the reverse direction becomes greater than the Zener breakdown voltage, the input voltage may be clamped to a first voltage or lower by utilizing the characteristic that the voltage is clamped while a large current flows due to the Zener breakdown. The clamping unit **150** may include a TVS diode or a circuit or component that performs a clamping operation in addition to the Zener diode.

In order to prevent current from flowing in the reverse direction, a diode **320** being connected in series with the input node **110** may be included in front of the input node **110.** The anode is connected to the direction in which the ignition voltage is inputted, and the cathode is connected to the input node **110,** so that current can be prevented from flowing in the ignition direction from the ignition wake-up circuit **100.**

The output node **130** can be connected to the ADC port **210** of the MCU **200.** Here, the ADC port **210** is an analog-to-digital (ADC) port that converts an analog signal into a digital signal, and is also referred to as an AD port. The maximum input voltage of the ADC port is 5 V, and as described above, the clamping unit can prevent the ADC port **210** from being damaged by clamping the input voltage to 5 V. When the ignition voltage becomes greater than the first reference voltage, the ignition voltage, which is a wake-up voltage, is inputted to the ADC port **210,** so that the MCU **200** can wake up.

By using the threshold voltage value of the ADC port **210** of the MCU **200,** the first reference voltage and the second reference voltage of the voltage sensing unit **120** can be set so that the ignition wake-up on/off operation can be reliably controlled even if the ignition voltage is unstable, thereby stabilizing the power supply.

A second resistor **160** being connected in parallel between the voltage sensing unit **120** and the output node **130** may be included. The second resistor **160** is connected in parallel between the output terminal of the voltage sensing unit **120** and the output node **130,** and can control the current consumption of the ignition voltage connection line. When the voltage sensing unit **120** outputs and is inputted to the ADC port **210,** a large current may flow in the connection line, and the second resistor **160** consumes the current to control the current consumption of the ignition voltage connection line. The resistance value of the second resistor **160** may be set according to the size of the ignition voltage and the rated current of the connection line or the ADC port, or may be set by the user.

The ignition wake-up circuit **100** according to the embodiment of the present invention can be applied for the wake-up function of the MCU **200** as shown in FIG. 5. FIG. 5 is an implementation example of an inverter ignition wake-up circuit for driving an ISG EOP motor. The ignition wake-up circuit **100** is connected to a battery voltage VBAT **410** into which a battery voltage is inputted and an ignition voltage Ignition **310,** and can input its output to an ADC port **210** of the MCU **200.** The battery voltage **310** can be applied to the inverter through a reverse polarity protection circuit. The ground GND **510** can provide a ground to the circuit. A TVS diode **430** can be connected in parallel to the battery voltage **310** to clamp a large voltage being inputted. When the battery voltage and ignition voltage are applied to the ignition wake-up circuit **100,** a wake-up signal being outputted from the ignition wake-up circuit **100** according to the size of the ignition voltage can be inputted to the ADC port **210** of the MCU **200** to wake-up the MCU **200.**

As shown in FIG. 6, an ignition wake-up circuit 10 can be configured using NPN and PNP transistors **11** and **12.** In this case, a circuit can be configured by connecting diodes **13** and **14** in front of each transistor. When an ignition voltage **310** is inputted, the battery voltage **410** operates the internal voltage regulator **220** of the MCU **200** to generate a 5 V or 3.3 V power supply to wake-up the MCU **200.** However, when the ignition voltage has a ripple near the critical voltage value of the transistors **11** and **12,** a malfunction may occur, and passive components such as a resistor and MLCC for driving the transistor are required, so that the ignition wake-up circuit **100** according to the embodiment of the present invention is disadvantageous in terms of price competitiveness and product miniaturization. That is, although two transistors **11** and 12 and a large number of resistors and MLCCs around them are required, the ignition wake-up circuit **100** according to an embodiment of the present invention can reduce and optimize the number of parts by replacing the relevant parts with a Zener diode and a voltage detector IC, thereby configuring a price-competitive circuit.

FIG. 7 is a block diagram of a power conversion device according to an embodiment of the present invention.

A power conversion device **700** according to one embodiment of the present invention comprises an ignition wake-up circuit unit **710,** a control unit **720,** and a voltage conversion unit **730.** Here, the voltage conversion unit **730** converts an input voltage and outputs it, and the control unit **720** operates the voltage conversion unit **730.** The ignition wake-up circuit unit **710** operates the control unit **720** in a sleep mode or a wake-up mode according to the ignition voltage. The voltage conversion unit **730** includes one or more switching elements, and the control unit **720** can convert the input voltage by controlling the switching elements to turn on and off. A detailed description of the ignition wake-up circuit unit **710** corresponds to the detailed description of the ignition wake-up circuit **100** of FIGS. 1 to 6, and thus, any overlapping description will be omitted hereinafter. The control unit **720** may be an MCU, and the voltage conversion unit **730** may be an inverter and an inverter for driving an EV cooling electric oil pump (EOP) motor.

The features, structures, effects, etc. described in the embodiments above are included in at least one embodiment, and are not necessarily limited to one embodiment. Furthermore, the features, structures, effects, and the like exemplified in each embodiment can be combined or modified and implemented in other embodiments by a person having ordinary knowledge in the field to which the embodiments belong. Therefore, the contents related to such combinations and modifications should be interpreted as being included in the scope of the embodiments.

Those skilled in the art related to the present embodiment will understand that the above-described description can be implemented in a modified form without departing from the essential characteristics thereof. Therefore, the disclosed methods should be considered from an illustrative rather than a restrictive perspective. The scope of the present invention is indicated by the claims, not the above description, and all differences within the scope equivalent thereto should be interpreted as being included in the present invention.

## Claims

1. An ignition wake-up circuit comprising:
an input node receiving an ignition voltage as an input;
an output node outputting a wake-up voltage; and
a voltage sensing unit outputting a wake-up signal according to a magnitude of the ignition voltage,
wherein the voltage sensing unit:
outputs the wake-up signal when the ignition voltage reaches a voltage level greater than or equal to a first reference voltage from a voltage less than the first reference voltage; and
outputs a low signal when the ignition voltage reaches a voltage level less than or equal to a second reference voltage from a voltage greater than or equal to the second reference voltage, and
wherein the first reference voltage is greater than the second reference voltage.

2. The ignition wake-up circuit according to claim 1,
wherein the voltage sensing unit comprises a voltage detector IC.

3. The ignition wake-up circuit according to claim 1,
wherein the wake-up signal is the ignition voltage.

4. The ignition wake-up circuit according to claim 1, comprising:
a first resistor connected in parallel between the input node and the voltage sensing unit.

5. The ignition wake-up circuit according to claim 1, comprising:
a clamping unit connected in parallel between the input node and the voltage sensing unit.

6. The ignition wake-up circuit according to claim 5,
wherein the clamping unit clamps the ignition voltage to a first voltage or lower.

7. The ignition wake-up circuit according to claim 1,
wherein the clamping unit comprises a Zener diode.

8. The ignition wake-up circuit according to claim 1,
wherein the output node is connected to an ADC port of an MCU.

9. The ignition wake-up circuit according to claim 1, comprising:
a second resistor connected in parallel between an output terminal of the voltage sensing unit and the output node.

10. An ignition wake-up circuit,
wherein an output voltage Vout outputs an input voltage Vin when the input voltage Vin is higher than a first voltage VDET+, and the output voltage Vout outputs O V when the input voltage Vin falls below a second voltage VDET-, and
wherein the first voltage VDET+ is higher than the second voltage VDET-.
